# EUROPÄISCHE PATENTSCHRIFT

(11) **EP 0 812 718 B1**
(45) Veröffentlichungstag und Bekanntmachung des Hinweises auf die Patenterteilung: **20.03.2002**
(21) Anmeldenummer: 97109276.2
(22) Anmeldetag: 09.06.1997
(51) Int. Cl.: B60K 7/00, B60K 17/08

(54) **Elektrischer Einzelradantrieb für ein Arbeitsfahrzeug**
Electric wheel drive utility vehicle
Moteur-roue électrique pour véhicule utilitaire

(30) Priorität: 14.06.1996 DE 19623737
(43) Veröffentlichungstag der Anmeldung: 17.12.1997
(73) Patentinhaber: DEERE & COMPANY, Moline, Illinois 61265-8098 (US)
(72) Erfinder: Weiss, Heinz, 64625 Bensheim (DE)
(74) Vertreter: Magin, Ludwig Bernhard

(56) Entgegenhaltungen:
- EP-A- 0 541 940
- DE-A- 2 127 256
- DE-A- 4 108 647
- US-A- 4 330 045
- US-A- 4 546 672
- US-A- 4 953 646
- US-A- 5 322 141

## Beschreibung

Die Erfindung betrifft einen Einzelradantrieb für landwirtschaftliche oder industrielle Arbeitsfahrzeuge, mit einem Elektromotor, dessen Ausgangswelle ein die Drehzahl untersetzendes Endantriebsgetriebe und ein diesem nachgeordnetes Fahrzeugrad antreibt.

Derartige Einzelradantriebe sind beispielsweise durch die DE-A-41 08 647 und die US-A-4,953,646 bekannt geworden. Die elektrische Energie für die Elektromotoren der Einzelradantriebe des Fahrzeugs wird durch eine Verbrennungskraftmaschine und einen diesem nachgeordneten Generator erzeugt. Bei den bekannten Antrieben können eine Reihe von für mechanische Antriebsstränge erforderlichen Bauteilen, wie beispielsweise die Fahrkupplung, Synchronisiereinrichtungen, Kriechganggetriebe, Gelenkwellen und dergleichen entfallen. Ferner haben elektrische Einzelradantriebe gegenüber konventionellen mechanischen Antrieben den Vorteil, eine sehr individuelle Anpassung der Antriebsleistung an unterschiedliche Fahranforderungen vornehmen zu können. So ist bei Verwendung einer geeigneten Steuerung für die Elektromotoren eine stufenlose Drehzahl- bzw. Geschwindigkeitseinstellung der Räder in Vorwärts- und Rückwärtsrichtung möglich. Ferner ist der Antrieb der Räder mit unterschiedlicher Drehzahl und individuell angepaßtem Drehmoment bei Kurvenfahrt vorteilhaft, da Fahrzeugverspannungen vermieden, der Reifenverschleiß verringert und eine verbesserte Spurtreue erreicht werden können.

Elektromotoren können innerhalb eines großen Drehzahlbereichs eingestellt werden, so daß die realisierbare Geschwindigkeit des Fahrzeugs einen weiten Bereich abdeckt. Da jedoch die Spreizung von Elektromotoren, d. h. das Verhältnis von maximaler Drehzahl zur Drehzahl im Auslegungspunkt, begrenzte Werte (beispielsweise 6) einnimmt, muß für steigende Höchstgeschwindigkeitsanforderungen der Auslegungspunkt zu höheren Drehzahlen verschoben werden. Dieses Auslegungskriterium kann bei Arbeitsfahrzeugen mit der Forderung kollidieren, daß die Antriebsdrehzahl im Auslegungspunkt des Elektromotors mit der Geschwindigkeit im Hauptarbeitsbereich des Fahrzeugs, bei der die höchste Leistung gefordert wird, korrespondieren sollte. Ackerschlepper müssen beispielsweise ihre maximale Leistung beim Pflügen, also bei Fahrzeuggeschwindigkeiten um 7 km/h aufbringen, daher sollte der Auslegungspunkt des Elektromotors auf die Fahrzeuggeschwindigkeit beim Pflügen angepaßt werden. Eine entsprechende Auslegung begrenzt jedoch die Höchstgeschwindigkeit des Fahrzeugs.

Aus der EP-A-0 541 940 geht ein Strassendecken-Fertiger mit einer hydrostatischen Hinterrad-Antriebseinrichtung hervor. Jedem Hinterrad ist ein Hydro-Verstellmotor mit koaxial nachgeordnetem Planetenradschaltgetriebe, welches mindestens zwei Schaltstufen für die Arbeitsfahrt und die Transportfahrt aufweist, zugeordnet. Dem Planetenschaltgetriebe schließt sich ein Reduktionsgetriebe an, welches einen zum Hydro-Verstellmotor achsversetzten in der Radfelge angeordneten Planetenradsatz und das Hinterrad antreibt.

Die der Erfindung zugrunde liegende Aufgabe wird darin gesehen, einen gattungsgemäßen elektrischen Einzelradantrieb bereitzustellen, durch den die genannten Probleme überwunden werden. Insbesondere sollte der Einzelradantrieb in der Lage sein, bei Verwendung handelsüblicher, kostengünstig herstellbarer Elektromotoren, einen großen Geschwindigkeitsbereich des Fahrzeugs zu realisieren, wobei der Auslegungspunkt des Elektromotors mit dem Hauptarbeitsbereich des Fahrzeugs korrespondiert und dennoch relativ hohe Fahrzeuggeschwindigkeiten möglich sind und wobei im Hauptarbeitsbereich die Leistungsverluste relativ gering gehalten werden können.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei dem erfindungsgemäßen elektrischen Einzelradantrieb ist zwischen Elektromotor und Endantriebsgetriebe ein weiteres Getriebe angeordnet, welches zwischen wenigstens zwei Drehzahlübertragungsstufen umschaltbar ist und in wenigstens einer Übertragungsstufe die Ausgangsdrehzahl des Elektromotors herab bzw. heraufsetzt. Hierdurch läßt sich der Geschwindigkeitsbereich des Einzelradantriebs zusätzlich spreizen. Insbesondere läßt sich der Auslegungspunkt des Elektromotors im wesentlichen unabhängig von der gewünschten Höchstgeschwindigkeit des Fahrzeugs festlegen.

Um eine Umschaltung auch unter hoher Leistungsbelastung zu ermöglichen, ist es von Vorteil für das weitere Getriebe ein unter Last schaltbares Übertragungsgetriebe vorzusehen. Hierfür eignen sich Planetengetriebe, insbesondere solche, die einen Ravigneaux-Satz enthalten. Das Planetengetriebe läßt sich zweckmäßiger Weise durch Verwendung von Kupplungen und/oder Bremsen umschalten.

Um Leistungsverluste, die im Übertragungsgetriebe auftreten, gering zu halten, wird eine der Drehzahlübertragungsstufen des Übertragungsgetriebes als direkter Durchtrieb, bei dem keine Drehzahlveränderung erfolgt, ausgebildet. Durch wenigstens eine weitere Drehzahlübertragungsstufe wird die Elektromotordrehzahl herab- oder heraufgesetzt. Der direkte Durchtrieb ist zweckmäßigerweise für den Fahrgeschwindigkeitsbereich vorgesehen, für den üblicherweise die höchste Leistung gefordert wird, und der für die Festlegung des Auslegungspunktes des Elektromotors herangezogen wird.

Vorzugsweise verhalten sich die Drehzahlübersetzungen der beiden Drehzahlübertragungsstufen im Verhältnis 1 : 3. Dies bedeutet beispielsweise, daß für den Fall, daß die eine Drehzahlübertragungsstufe einen direkten Durchtrieb liefert, die Ausgangsdrehzahl in der anderen Drehzahlübertragungsstufe um den Faktor 3 herauf- oder herabgesetzt wird.

Ein elektrischer Einzelradantrieb eignet sich besonders für Räder der lenkbaren Vorderachse des Arbeitsfahrzeugs. Hierbei kann einerseits die Ausbildung einer relativ aufwendigen mechanischen Kraftübertragung von dem Verbrennungsmotor auf die Vorderachse vermieden werden. Andererseits läßt sich durch diese Anwendung ein relativ günstiger Gesamtwirkungsgrad des Fahrzeugs realisieren, da über die Vorderachse in der Regel ein geringerer Leistungsanteil als über die Hinterachse übertragen wird, und die Hinterachse wie bisher mechanisch bzw. über einen Hybridantrieb, wie er in der parallel beim Deutschen Patentamt eingereichten Patentanmeldung mit unserem Aktenzeichen Case No. 8711 beschrieben wurde, angetrieben werden kann.

Vorzugsweise wird als Elektromotor ein Asynchronmotor verwendet, dessen Drehzahl sich durch eine Frequenzsteuerung bequem zwischen Null und einer Maximaldrehzahl einstellen läßt. Asynchronmotoren sind weit verbreitet und relativ preiswert in der Herstellung.

Es werden bevorzugt Elektromotoren mit hoher Maximaldrehzahl, beispielsweise 10000 U/min, verwendet. Daher ist es zweckmäßig als Endantriebsgetriebe ein Planetengetriebe mit zwei Planetensätzen zu verwenden, welches eine hohe Drehzahluntersetzung liefert.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen erfindungsgemäßen elektrischen Einzelradantrieb mit umschaltbarem Planetengetriebe und
- Fig. 2: einen erfindungsgemäßen elektrischen Einzelradantrieb mit Ravigneaux-Satz.

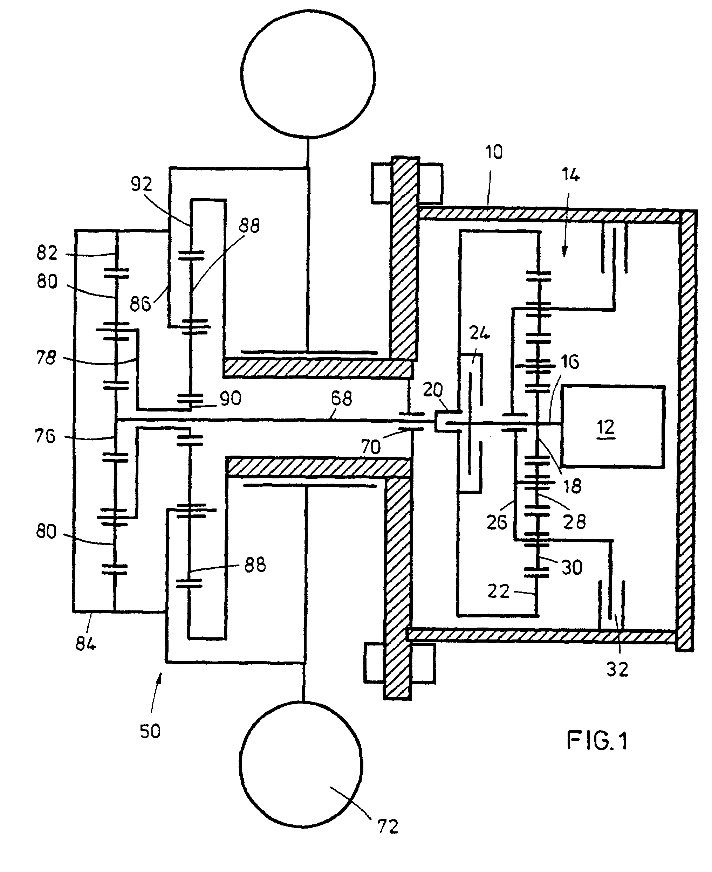

Aus Fig. 1 geht ein elektrischer Einzelradantrieb hervor, wie er beispielsweise bei einer gefederten, lenkbaren Vorderachse eines Ackerschleppers Anwendung finden kann. Das Gehäuse 10 des Einzelradantriebs ist an einem nicht näher dargestellten Achskörper der Vorderachse befestigt. In dem Gehäuse 10 befindet sich ein Elektromotor 12 und ein zwischen zwei Übersetzungsverhältnissen umschaltbares als Planetengetriebe ausgebildetes Übertragungsgetriebe 14.

Die Ausgangswelle 16 des Elektromotors 12 trägt ein Sonnenrad 18 des Planetengetriebes 14 und ist mit seinem freien Ende in einer Lagerstelle 20 eines Ringrades 22 drehbar gelagert. Das Ringrad 22 ist mit einer Verbindungswelle 68 drehfest verbunden. Die Ausgangswelle 16 des Elektromotors 12 läßt sich über eine Kupplung 24 wahlweise drehfest mit dem Ringrad 22 verbinden. Auf der Ausgangswelle 16 des Elektromotors 12 ist ein Planetenträger 26 drehbar gelagert. Der Planetenträger 26 trägt mehrere Sätze von jeweils zwei Planetenrädern 28, 30 (von denen je zwei dargestellt sind), die miteinander kämmen. Das jeweils radial innere Planetenrad 28 kämmt mit dem Sonnenrad 18, und das jeweils äußere Planetenrad 30 kämmt mit dem inneren Planetenrad 28 sowie dem Ringrad 22. Der Planetenträger 26 läßt sich durch eine Bremse 32 wahlweise gegenüber dem Gehäuse 10 drehfest festsetzen.

Indem die Bremse 32 geöffnet und die Kupplung 24 derart geschlossen wird, daß sie Drehmomente übertragen kann, wird eine erste Drehzahlübertragungsstufe eingestellt. Hierbei drehen sich das Ringrad 22, der Planetenträger 26 und die Planetenräder 28, 30 gemeinsam mit der Ausgangswelle 16 des Elektromotors 12. Hierdurch erfolgt ein direkter Durchtrieb von der Ausgangswelle 16 des Elektromotors 12 auf die Verbindungswelle 68, ohne daß eine Drehzahländerung erfolgt.

Für eine zweite Drehzahlübertragungsstufe wird die Kupplung 24 geöffnet und die Bremse 32 geschlossen. Der Planetenträger 26 ist damit drehfest mit dem Gehäuse 10 verbunden. Das Sonnenrad 18 treibt die inneren Planetenräder 28 an. Die inneren Planetenräder 28 treiben die äußeren Planetenträger 30 und diese treiben das Ringrad 22 und damit die Verbindungswelle 68 an. Wenn der Durchmesser des Ringrades 22 dreimal so groß wie der Durchmesser des Sonnenrades 16 gewählt wird, erfolgt eine Drehzahlherabsetzung der Ausgangsdrehzahl des Elektromotors 12 auf ein Drittel.

Die Verbindungswelle 68 stützt sich über eine Lagerstelle 70 an dem Gehäuse 10 ab. Sie dient als Eingangswelle für ein Endantriebsgetriebe 50 und trägt ein Sonnenrad 76. Auf der Verbindungswelle 68 ist ein Planetenträger 78 drehbar gelagert, dessen Planetenräder 80 mit dem Sonnenrad 76 und einem Ringrad 82 kämmen. Das Ringrad 82 ist drehfest in einem Radlagergehäuse 84 angeordnet, welches drehfest ein Vorderrad 72 des Fahrzeugs trägt. In dem Radlagergehäuse 84 ist ein weiterer Planetenträger 86 drehfest angeordnet. Die Planetenräder 88 des weiteren Planetenträgers 86 kämmen einerseits mit einem Sonnenrad 90, welches drehfest mit dem erstgenannten Planetenträger 78 in Verbindung steht, und andererseits mit einem Ringrad 92, welches drehfest am stationären Gehäuse 10 montiert ist.

Durch das als Planetengetriebe ausgebildete Endantriebsgetriebe 50 wird die von der Verbindungswelle 68 übertragene Drehzahl in einem festen Verhältnis herabgesetzt. Enthalten die Zahnräder des Planetengetriebes Zähnezahlen entsprechend nachfolgender Tabelle, so ergibt sich eine Drehzahlherabsetzung von 1 : 0,02275. Das auf das Vorderrad 72 übertragene Drehmoment wird dabei entsprechend erhöht. Damit ergibt sich eine Gesamtdrehzahluntersetzung für das Übertragungsgetriebe 14 und das Endantriebsgetriebe 50 in der ersten Drehzahlübertragungsstufe von 1 : 0,02275 und in der zweiten Drehzahlübertragungsstufe von 1 : 0,00758.

**Tabelle**

| Zahnrad | Zähnezahl |
|---|---|
| Sonnenrad 76 | 24 |
| Ringrad 82 | 88 |
| Sonnenrad 90 | 24 |
| Ringrad 92 | 164 |

Bei einer Drehzahl des Elektromotors von 3500 U/min, einem Reifenradius von 0,7 m und einer Drehzahluntersetzung von 0,007-58 (zweite Untersetzungsstufe) ergibt sich eine Fahrzeuggeschwindigkeit von ca. 7 km/h. Bei Erhöhung der Motordrehzahl auf 10000 U/min wird die Fahrzeuggeschwindigkeit auf ca. 20 km/h gesteigert. Bei einer Motordrehzahl von 5000 U/min, einem Reifenradius von 0,7 m und einer Drehzahluntersetzung von 0,02275 (erste Drehzahluntersetzungsstufe) ergibt sich eine Fahrzeuggeschwindigkeit von ca. 30 km/h. Durch eine Erhöhung der Motordrehzahl auf 13333 U/min läßt sich die Fahrzeuggeschwindigkeit auf 80 km/h steigern.

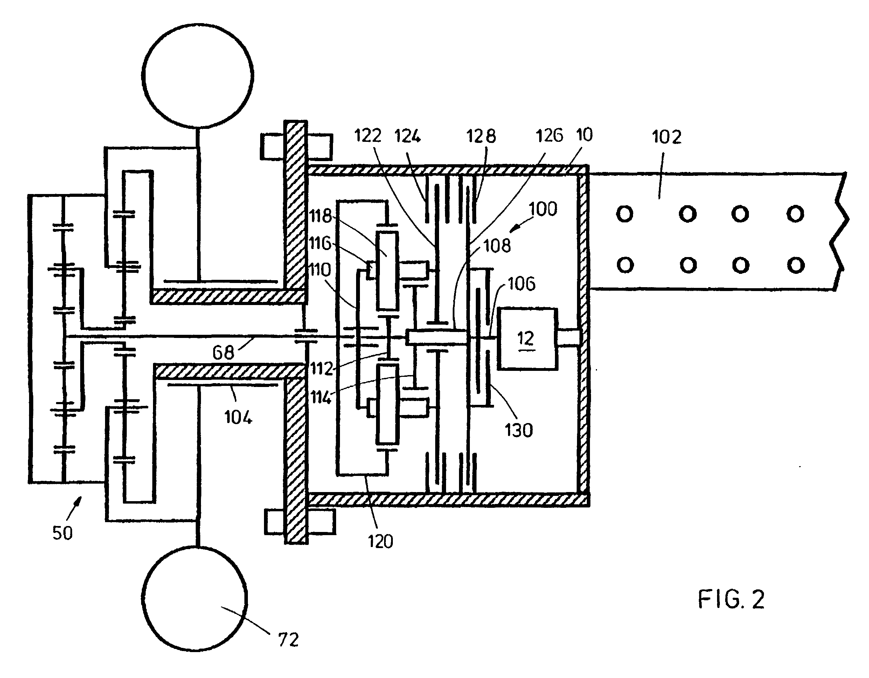

Aus Fig. 2 geht ein Einzelradantrieb hervor, der sich lediglich in der Ausbildung des umschaltbaren Planetengetriebes von der in Fig. 1 dargestellten Ausgestaltung unterscheidet. Sich entsprechende Bauteile sind in beiden Figuren mit denselben Bezugsziffern versehen. Bei dem in Fig. 2 dargestellten Planetengetriebe handelt es sich um einen Ravigneaux-Satz 100, der in dem an dem Achskörper 102 befestigten Endantriebsgehäuse 10 untergebracht ist. Der Achskörper 102 der Hinterachse greift radial versetzt zur Radachse, die mit der Verbindungswelle 68 zusammenfällt, an einem Endantriebsgehäuse 10 an. Auf dem Endantriebsgehäuse 10 ist über ein Radlager 104 das Vorderrad 72 drehbar gelagert, welches unter Zwischenschaltung eines als Planetengetriebe ausgebildeten Endantriebgetriebes 50 von dem Elektromotor 12 und dem Ravigneaux-Satz 100 angetrieben wird.

Der Elektromotor 12 ist mit einer Ausgangswelle 106 verbunden, die bereichsweise durch eine sich relativ verdrehbare Hohlwelle 108 verläuft und deren freies Ende in einem Planetenträger 110 des Ravigneaux-Satzes 100 gelagert ist. Die Ausgangswelle 106 trägt drehfest ein erstes Sonnenrad 112 des Ravigneaus-Satzes 100. Ein zweites Sonnenrad 114 des Ravigneaux-Satzes 100 ist auf der Hohlwelle 108 drehfest montiert. Auf dem Planetenträger 110 sind Sätze von langen Planetenrädern 116 und von kurzen Planetenrädern 118 angeordnet. Es können beispielsweise je drei Planetenradsätze vorgesehen sein, von denen jedoch nur zwei dargestellt wurden. Die langen Planetenräder 116 kämmen mit dem zweiten, größeren Sonnenrad 114, und die kurzen Planetenräder 118 kämmen mit dem ersten, kleineren Sonnenrad 112 sowie mit einem Ringrad 120. Ferner kämmt jedes der langen Planetenräder 116 mit einem zugehörigen kurzen Planetenrad 118.

Das Ringrad 120 ist drehfest mit der Verbindungswelle 68 verbunden, auf dessen einem Ende der Planetenträger 110 drehbar gelagert ist. Der Planetenträger 110 trägt drehfest eine erste Bremsscheibe 122, die auf der Hohlwelle 108 drehbar gelagert ist und mit einer am Endantriebsgehäuse 10 befestigten ersten Bremseinrichtung 124 zusammenwirkt. Die Hohlwelle 108 trägt drehfest eine zweite Bremsscheibe 126, die mit einer am Endantriebsgehäuse 10 befestigten zweiten Bremseinrichtung 128 zusammenwirkt. Ferner ist zwischen der Ausgangswelle 106 und der Hohlwelle 108 eine Kupplung 130 vorgesehen.

Durch den Ravigneaux-Satz 100 läßt sich eine Umschaltung zwischen zwei Drehzahlübertragungsverhältnissen vornehmen.

Wird lediglich die erste Bremse 124 geschlossen (1. Gang), so treibt das Ringrad 120 die Welle 68 mit einer Drehzahl an, wie sie sich aus dem Zähnezahlverhältnis des ersten Sonnenrades 112 und des Hohl- oder Ringrades 120 (bei festgehaltenem Planetenträger 110) ergibt. Das lange Planetenrad 116, das Sonnenrad 114 und die Elemente der Bremse 128 (Bremsscheibe 126) liegen hierbei nicht im Kraftfluß und laufen kraftlos mit. Die Momentenübertragung erfolgt von dem Elektromotor 12 über die Ausgangswelle 106, das erste Sonnenrad 112, das kurze Sonnenrad 118, das Ringrad 120 auf die Zwischenwelle 68.

Wird zusätzlich zur ersten Bremse die zweite Bremse 128 geschlossen (2. Gang), so stützt sich das Getriebe nach Gang 1 nur zusätzlich auf dem nun feststehenden Sonnenrad 114 ab und erfährt eine Geschwindigkeitserhöhung. Es liegen nun alle Teile das Ravigneaux-Satzes 100 im Leistungsfluß.

Bei geschlossener Kupplung 130 und offenen Bremsen 124, 128 (3. Gang) sind die beiden Sonnenräder 112 und 114 miteinander verblockt und laufen als direkter Gang um. Der Elektromotor 12 treibt über den geblockten Ravigneaux-Satz 100 unverändert die Zwischenwelle 68 mit der Elektromotorausgangsdrehzahl an.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Einzelradantrieb für landwirtschaftliche oder industrielle Arbeitsfahrzeuge, mit einem Elektromotor (12), dessen Ausgangswelle (16) ein die Drehzahl untersetzendes Endantriebsgetriebe (50) und ein diesem nachgeordnetes Fahrzeugrad (72) antreibt, **dadurch gekennzeichnet, daß** zwischen Elektromotor (12) und Endantriebsgetriebe (50) ein Übertragungsgetriebe (14) angeordnet ist, welches zwischen wenigstens zwei Drehzahlübertragungsstufen umschaltbar ist, wobei eine Drehzahlübertragungsstufe des Übertragungsgetriebes (14) als direkter Durchtrieb ohne Drehzahlveränderung ausgebildet ist und die Ausgangswelle (16) des Elektromotors (12) koaxial zur Radachse verläuft.

2. Einzelradantrieb nach Anspruch 1, **dadurch gekennzeichnet, daß** das Übertragungsgetriebe (14) ein durch Kupplungen (20) und/oder Bremsen (32) umschaltbares Planetengetriebe ist.

3. Einzelradantrieb nach Anspruch 1 oder 2, **dadurch gekennzeichnet, daß** das Übertragungsgetriebe (14) einen Ravigneaux-Satz enthält.

4. Einzelradantrieb nach einem der Ansprüche 1 bis 3, **dadurch gekennzeichnet, daß** durch wenigstens eine weitere Drehzahlübertragungsstufe die Elektromotordrehzahl herabgesetzt wird.

5. Einzelradantrieb nach einem der Ansprüche 1 bis 4, **dadurch gekennzeichnet, daß** eine Drehzahlübertragungsstufe eine Drehzahlherabsetzung von ungefähr 1:3 bereitstellt.

6. Einzelradantrieb nach einem der Ansprüche 1 bis 5, **dadurch gekennzeichnet, daß** das elektrisch angetriebene Fahrzeugrad (72) ein Rad der lenkbaren Vorderachse des Fahrzeugs ist.

7. Einzelradantrieb nach einem der Ansprüche 1 bis 6, **dadurch gekennzeichnet, daß** der Elektromotor (12) ein Asynchronmotor ist.

## Claims

1. An individual wheel drive for agricultural or industrial utility vehicles, with an electric motor (12), whose output shaft (16) drives a final drive gearbox (50) reducing the speed of rotation and a vehicle wheel (72) following this, **characterized in that** a transmission gear (14), which can be shifted between at least two speed transmission steps, is arranged between the electric motor (12) and the final drive gearbox (50), wherein one speed transmission step of the transmission gear (14) is in the form of a direct through drive without alteration of the speed of rotation and the output shaft (16) of the electric motor (12) is coaxial with the wheel axis.

2. An individual wheel drive according to claim 1, **characterized in that** the transmission gear (14) is a planetary gear which can be shifted by clutches (24) and/or brakes (32).

3. An individual wheel drive according to claim 1 or 2, **characterized in that** the transmission gear (14) comprises a Ravigneaux set.

4. An individual wheel drive according to any of claims 1 to 3, **characterized in that** the speed of the electric motor is reduced by at least one further speed transmission step.

5. An individual wheel drive according to any of claims 1 to 4, **characterized in that** one speed transmission step provides a speed reduction of approximately 1 : 3.

6. An individual wheel drive according to any of claims 1 to 5, **characterized in that** the electrically driven vehicle wheel (72) is a wheel of the steered front axle of the vehicle.

7. An individual wheel drive according to any of claims 1 to 6, **characterized in that** the electric motor (12) is an asynchronous motor.

## Revendications

1. Dispositif d'entraînement de roue individuelle pour véhicules utilitaires agricoles ou industriels, comportant un moteur électrique (12), dont l'arbre de sortie (16) entraîne un mécanisme d'entraînement final (50), qui réalise une démultiplication de la vitesse de rotation, et entraîne un véhicule automobile (72) disposé en aval de ce mécanisme, **caractérisé en ce qu'**entre le moteur électrique (12) et le mécanisme d'entraînement final (50) est disposé un mécanisme de transmission (14), qui est commutable entre au moins deux étages de transmission de vitesse de rotation, un étage de transmission de vitesse de rotation de la boîte de vitesses du mécanisme de transmission (14) étant agencé sous la forme d'un dispositif d'entraînement direct sans modification de la vitesse de rotation, et l'arbre de sortie (16) du moteur électrique (12) s'étendant coaxialement à l'essieu.

2. Dispositif d'entraînement de roue individuelle selon la revendication 1, **caractérisé en ce que** le mécanisme de transmission (14) est un engrenage planétaire commutable au moyen d'accouplements (20) et/ou de freins (32).

3. Dispositif d'entraînement de roue individuelle selon la revendication 1 ou 2, **caractérisé en ce que** le mécanisme de transmission (14) contient un ensemble Ravigneaux.

4. Dispositif d'entraînement de roue individuelle selon l'une des revendications 1 à 3, **caractérisé en ce que** la vitesse de rotation du moteur électrique est réduite par au moins un autre étage de transmission de la vitesse de rotation.

5. Dispositif d'entraînement de roue individuelle selon l'une des revendications 1 à 4, **caractérisé en ce qu'**un étage de transmission de la vitesse de rotation réalise une réduction de la vitesse de rotation dans le rapport égal à environ 1:3.

6. Dispositif d'entraînement de roue individuelle selon l'une des revendications 1 à 5, **caractérisé en ce que** la roue mue électriquement (72) du véhicule est une roue de l'essieu avant orientable du véhicule.

7. Dispositif d'entraînement de roue individuelle selon l'une des revendications 1 à 6, **caractérisé en ce que** le moteur électrique (12) est un moteur asynchrone.
